# EUROPÄISCHE PATENTSCHRIFT

(11) **EP 1 317 499 B1**
(45) Veröffentlichungstag und Bekanntmachung des Hinweises auf die Patenterteilung: **03.11.2004**
(21) Anmeldenummer: 01971926.9
(22) Anmeldetag: 18.08.2001
(51) Int. Cl.: C08J 3/24, C09J 7/02, C09J 133/14

(54) **VERFAHREN ZUR VERNETZUNG VON POLYACRYLATEN**
METHOD FOR CROSS-LINKING POLYACRYLATES
PROCEDE DE RETICULATION DE POLYACRYLATES

(30) Priorität: 08.09.2000 DE 10044374
(43) Veröffentlichungstag der Anmeldung: 11.06.2003
(73) Patentinhaber: tesa AG, 20253 Hamburg (DE)
(72) Erfinder: HUSEMANN, Marc, 22605 Hamburg (DE); ZÖLLNER, Stephan, 22043 Hamburg (DE); TOM WÖRDEN, Kai, 21698 Harsefeld (DE)
(86) Internationale Anmeldenummer: PCT/EP2001/009555
(87) Internationale Veröffentlichungsnummer: WO 2002/020647

(56) Entgegenhaltungen:
- EP-A- 0 752 435
- DE-C- 19 716 996
- US-A- 4 717 605
- US-A- 5 776 290

## Beschreibung

Die Erfindung betrifft die Vernetzung von haftklebrigen Palyacrylathotmelts mit di- oder multifunktionellen Epoxiden bzw. mit di- oder multifunktionellen Alkoholen.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Durch die damit verbundene Einführung der Hotmelt-Technologie werden immer höhere Anforderungen an die Klebemassen gestellt Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden. Dieses Anforderungsprofil wird durch Polyacrylate mit hohem Molekulargewicht, hoher Polarität und anschließender effizienter Vernetzung erreicht. Zur Vernetzung stehen prinzipiell 2 Methoden zur Verfügung, da die thermische Vernetzung von Acrylathaftschmelzklebem sich nur über Umwege realisieren läßt. Die Elektronenstrahlvemetzung bietet den Vorteil, daß relativ hohe Masseaufträge noch vemetzt werden können. Der Nachteil ist die uneffiziente Vemetzung, da keine reaktiven Gruppen, wie z.B. Doppelbindungen, vorhanden sind. Daher ist die Qualität der Elektronenstrahl-Vernetzung von Polyacrylaten immer relativ schlecht

Die UV-Vemetzung benötigt einen geringeren apparativen Aufwand und ist daher von Vorteil für die technische Anwendung. Hierbei werden intermediär Radikale gebildet, welche miteinander reagieren und zu einer Vemetzung der Haftklebemassen führen.

Die US 4,717,605 beschreibt eine Methode zum Verkleben optischer Glasteile. Verwendet hierzu werden strahlungshärtbare Klebmassen auf Basis von ionisch polymerisierbaren Epoxidsystemen und ionischen Photoinitiatoren auf Basis von Triarylsulfonium-Komplexsalzen. Diese Klebmassen beinhalten weiterhin mindestens eine ethylenisch ungesättigte Verbindung, welche durch freie Radikale bei Anwesenheit eines radikalischen Photoinitiators polymerisiert werden kann.

In der WO 88/02879 wird ein Photoinitiator und ein Eisensalz zur kationischen Photopolymerisation eingesetzt. Diese Schrift offenbart eine polymerisierbare Zusammensetzung, welche aus einem über freie Radikale polymerisierbares Material und ein Photokatalysatorsystem beinhaltet Das Photoinitiatorsystem besteht dabei aus π-Aromaten-Metallkomplexen der Form

(R⁶―Fe⁺―R⁷) LZ⁻ₖ,

wobei R⁶ ein η⁶-Aromat, R⁷ das Anion einer Cyclopentadienylverbindung, L ein di- bis heptavalentes Metall oder Metalloid, Z ein Halogen und k der um 1 erhöhten Valenz von L ist. Weiterhin beinhaltet das Photokatalysatorsystem eine peroxidische oder hydroperoxidische Verbindung und optional ein Metallocen.

In der US 5,776,290 wird ein Verfahren zur Herstellung eines beschichteten Schmirgelartikels beansprucht, wobei ein erstes Bindemittel auf einem Träger vorliegt und eine Vielzahl von Schmirgelteilchen in diesem Bindemittel vorhanden sind. Das Bindemittel besteht aus einem druckempfindlichen Heißschmelzklebemassenfilm. Durch eine Energiequelle wird diese Heißschmelzklebemasse gehärtet, so daß die Schmirgelteilchen von einer vemetzten Schicht der Klebemasse überzogen sind. Die in dieser Schrift mit einem Epoxid vernetzte Heißschmelzktebemasse basiert auf haftklebrigen Polyestern.

Die UV-initiierte Epoxidvemetzungsreaktion konnte als sehr effiziente Vemetzungsreaktion bisher noch nicht auf Polyacrylathaftklebemasen übertragen werden.

Aufgabe der Erfindung ist es, ein Verfahren zur Vemetzung von Polyacrylaten, insbesondere von Heißschmelzklebemassen auf Polyacrylatbasis, zur Verfügung zu stellen, welches die Nachteile des Standes der Technik nicht aufweist und welche den Stand der Technik vorteilhaft erweitert.

Gelöst wird diese Aufgabe durch ein Verfahren zu Vemetzung von Polyacrylaten gemäß dem Hauptanspruch. Es wurde überraschend und für den Fachmann vollkommen unerwartet gefunden, daß sich Polyacrylate über die UV-initiierte Epoxidvemetzung hervorragend vemetzen lassen und bezüglich der Scherfestigkeit Vorteile gegenüber konventionellen Vemetzungsmechanismen, insbesondere der Elektronenstrahl-Vernetzung, aufweisen, sofem sie während der Polymerisation mit entsprechenden Gruppen funktionalisiert wurden. Die Unteransprüche betreffen vorteilhafte Weiterbildungen der Erfindung. Ein Nebenanspruch betrifft die Verwendung von di- oder multifunktionellen sauerstoffhaltigen Verbindungen, insbesondere von di- oder multifunktionellen Epoxiden oder Alkoholen, als Vemetzungsreagenz für funktionalisierte Polyacrylate, insbesondere funktionalisierte Acrylatschmelzhaftkleber.

Demgemäß betrifft der Hauptanspruch ein Verfahren zur Herstellung vemetzter Polyacrylate, bei welchem durch Copolymerisation einer Monomermischung auf Acrylatbasis ein Polymer erzeugt wird und nach der Polymerisation mittels UV-Strahlung eine Vemetzung des Polymers hervorgerufen wird, und wobei bis zu 10 Gew.-% copolymerisierbare Monomere, welche eine oder mehrere Epoxygruppen und/oder eine oder mehrere Hydroxygruppen enthalten, während der Copolymerisation in die Polymere eingebaut werden, und den Polymeren vor der Vernetzung zumindest ein Photokationenerzeuger sowie ein oder mehrere di- oder multifunktionelle Epoxide und/oder ein oder mehrere di- oder multifunktionelle Alkohole zugesetzt werden.

Bevorzugt werden die freien di- oder multifunktionellen Epoxide beziehungsweise die freien di- oder multifunktionellen Alkohole dabei derart eingesetzt, daß eine dieser Komponente in deutlichem Überschuß gegenüber der anderen vorhanden ist (mit freien Epoxiden bzw. Alkoholen sind hier die nicht in die Polymerkette eingebauten funktionalisierten Monomere bezeichnet). Bei einem Überschuß an freien Epoxiden ist es vorteilhaft, wenn nicht mehr als 10 mol-% Hydroxygruppen in Form der freien Alkohole vorhanden sind, bezogen auf die Epoxygruppen der freien Epoxide; bei einem Überschuß an freiem Alkohol ist es günstig, den Anteil der Epoxygruppen in Form von freien Epoxiden nicht über einen Anteil von 10 mol-%, bezogen auf die Hydroxygruppen des freien Alkohols, zu wählen.

In sehr bevorzugter Weise werden bei Anwesenheit di- oder multifunktioneller freier Alkohole keine di- oder multifunktionellen freien Epoxide zugesetzt, entsprechend ist es sehr von Vorteil, bei Anwesenheit von di- oder multifunktionellen freien Epoxiden die Anwesenheit von di- oder multifunktionellen freien Alkoholen zu vermeiden.

In einer ersten vorteilhaften Ausführungsform des erfinderischen Verfahrens ist die Monomermischung derart zusammengesetzt, daß die resultierenden Polymere haftklebende Eigenschaften besitzen.

Bevorzugt handelt es sich bei den zu vemetzenden Polyacrylaten um solche, welche vor der Vemetzung im Heißschmelzverfahren ver- und bearbeitet wurden .

Weiterhin ist das erfinderische Verfahren sehr günstig, wenn sich die Monomermischung wie folgt zusammensetzt:
a) 60 bis 99,5 Gew.-% (Meth-)Acrylsäure und/oder (Meth-)Acrylsäureester der folgenden Formel 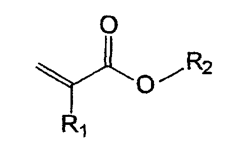 wobei R¹ = H oder CH₃ und R² eine Alkylkette mit 1 bis 20 C-Atomen ist
b) 0,5 bis 10 Gew.-% copolymerisierbare Monomere, welche eine oder mehrere Epoxygruppen und/oder eine oder mehrere Hydroxygruppen enthalten,
c) optional bis zu maximal 39,5 Gew.-% copolymerisierbare olefinisch ungesättigte Monomere mit funktionellen Gruppen, welche die Doppelbindung für die Polymerisationsreaktion aktivieren,
   wobei die Komponenten der Monomermischung sich zu 100 % addieren,
   und/oder wenn den Polymeren vor der Vemetzung
d) 0,01 bis 25 Gew.-% eines Photokationenerzeugers und
e) 0,1 bis 5 Gew.-% eines oder mehrerer di- oder multifunktioneller Epoxide und/oder eines oder mehrerer di- oder multifunktioneller Alkohole
zugesetzt werden, so daß sich die Polymere und die Komponenten d) und e) zu 100 Gew.-% addieren.

Die erfinderische Gedanke ist, schon während der Polymerisation Monomere mit entweder Epoxygruppen und/oder Hydroxygruppen in die Polyacrylate mit einzupolymerisieren. Über diese funktionellen Gruppen läßt sich dann bei Anwesenheit geeigneter Vemetzer, dieses sind insbesondere die oben beschriebenen di- oder multifunktionellen Epoxide und/oder dioder multifunktionelle Alkohole für mit Epoxygruppen und/oder mit Hydroxygruppen modifizierte Polyacrylate, unter Bestrahlung mit ultravioletter Strahlung eine Vemetzung erzielen. Auf diese Weise ist es möglich, derartige Vernetzer für die kationische Härtung beziehungsweise Vemetzung von funktionalisierten Polyacrylaten einzusetzen.

In einer vorteilhaften Weiterentwicklung des erfinderischen Verfahrens stellt in Komponente a) der Monomermischung der Rest R² eine Alkylkette mit 4 bis 14 C-Atomen, bevorzugt mit 4 bis 9 C-Atomen dar.

Spezifische Beispiele für derartige sehr vorteilhaft einzusetzende Acrylmonomere sind n-Butylacrylat, n-Pentylacrylat, n-Hexylacrylat, n-Heptylacrylat, n-Octylacrylat, n-Nonylacrylat und deren verzweigten isomere, wie z.B. 2-Ethylhexylacrylat.

Weitere Vinylmonomere, die im Sinne der Komponente c) vorteilhaft in Kombination mit Acrylatmonomeren eingesetzt werden können, umfassen Vinylester, Vinylether, Vinylhalogenide, Vinylidenhalogenide und Nitrile von ethylenisch ungesättigten Kohlenwasserstoffen. Spezifische Beispiele sind Vinylacetat, N-Vinylformamid, Vinylpyridin, Acrylamide, Ethylvinylether, Vinylchlorid, Vinylidenchlorid, Acrylonitril, Maleinsäureanhydrid und Styrol.

Die Monomere werden bevorzugt derart gewählt, daß das hergestellte Polymer Klebeigenschaften nach dem Handbook of Pressure-sensitive Adhesives, S. 172, §1, 1989 aufweist.

Für die dargestellte Vemetzungsreaktion werden die dem Fachmann geläufigen Photokationeninitiatoren, vorzugsweise einer derjenigen Initiatoren aus der im folgenden dargestellten Gruppe, verwendet.

Als Photokationenerzeuger ("Photoinitiatoren") werden in bevorzugter Weise Aryldiazoniumsalze ("Oniumsalze"), die sich allgemein durch die Formel Ar-N=N⁺ LX⁻ darstellen lassen, wobei LX⁻ ein Addukt einer Lewissäure L und einer Lewisbase X⁻ ist, eingesetzt. Besonders vorteilhaft sind BF₄⁻, SbF₅⁻, AsF₅⁻, PF₅⁻, SO₃CF₂⁻ für LX⁻. Unter UV-Strahlungseinfluß kommt es zu einer schnellen Molekülspaltung in das Arylhalogenid (ArX), Stickstoff sowie die entsprechende Lewissäure.

Auch Aryliodoniumsalze (C₆H₅)RI⁺ LX⁻, wobei R ein organisches Radikal ist, hierbei insbesondere Diaryliodoniumsalze (C₆H₅)₂l⁺ LX⁻, sowie Triarylsulfoniumsalze (C₆H₅)₃S⁺ LX⁻ sind für die Anwendung als kationische Photoinitiatoren bekannt; diese bilden in Gegenwart von Protonendonatoren starke (Brönstedt-)Säuren, welche ebenfalls für die Initiierung von kationischen Polymerisationen und für das erfinderische Verfahren gut geeignet sind.

Sulfoniumsalze als Kationen-Photoinitiatoren liegen beispielsweise auch in Form der Verbindungen H₅C₆―CO―CH₂―S⁺ LX⁻ oder H₅C₆―CO―CH₂―Pyr⁺ LX⁻, wobei Pyr ein stickstoffhaltiges heteroaromatisches System (z.B. Pyridin, Pyrimidin) darstellt, vor.

In einer sehr vorteilhaften Ausführungsform des erfinderischen Verfahrens wird als Photokationenerzeuger ein Triarylsulfonium-hexafluorosalz der 15. Gruppe des Periodensystems gewählt, bevorzugt derart, daß das Element der 15. Gruppe in der Oxidationsstufe IV vorliegt. in sehr günstiger Weise werden Triarylsulfonium-hexafluorophosphat und/oder Triarylsulfonium-hexafluoroantimonat eingesetzt.

In einer sehr vorteilhaften Weiterentwicklung des erfinderischen Verfahrens wird während der Vernetzung durch Abdeckung der zu vemetzenden Polyacrylate mit einer Maske mit Bereichen unterschiedlicher UV-Licht-Durchlässigkeit eine Strukturierung der vemetzten Polyacrylate erzielt. Dabei wird derart mit ultraviolettem Licht bestrahlt, daß bestimmte Bereiche der Polymermischung unterschiedlichen Intensitäten der Strahlung ausgesetzt sind. Die Strukturierung der Polyacrylate besteht darin, daß in den Polyacrylaten Bereiche hoher Vemetzung neben Bereichen geringer Vernetzung und/oder unvemetzten Bereichen vorliegen.

Beansprucht wird weiterhin die Verwendung von di- oder multifunktionellen sauerstoffhaltigen Verbindungen, insbesondere von di- oder multifunktionellen Epoxiden oder Alkoholen, als Vemetzungsreagenz für die bei Anwesenheit eines Photokationenerzeugers durch ultraviolette Strahlung hervorgerufene Vernetzungsreaktion von durch Epoxygruppen bzw. durch Hydroxygruppen funktionalisierten Polyacrylaten.

Die Grundlagen der Erfindung werden im folgenden dargestellt. Die zu vemetzenden Polymere werden durch eine freie radikalische Polymerisation aus der Monomermischung derart hergestellt, daß ihr Molekulargewicht in der Größenordnung von 250.000 - 1.000.000 g/mol liegt.

Die freie radikalische Polymerisation kann in Gegenwart eines oder mehrerer organischer Lösungsmittel und/oder in Gegenwart von Wasser oder in Substanz durchgeführt werden. Bevorzugt wird so wenig Lösungsmittel wie möglich eingesetzt. Die Polymerisationszeit beträgt - je nach Umsatz und Temperatur- zwischen 6 und 48 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet Als Polymerisationsinitiatoren werden übliche radikalbildende Verbindungen, wie beispielsweise Peroxide und Azoverbindungen, eingesetzt Auch Initiatorgemische können verwendet werden. Bei der Polymerisation können weiterhin Thiole als Regler zur Molekulargewichtssenkung und Verringerung der Polydispersität eingesetzt werden. Als sogenannte Polymerisationsregler können z.B. Alkohole und Ether verwendet werden.

In einer sehr günstigen Vorgehensweise wird nach der Polymerisation die Haftklebemasse aus Lösung auf ein Trägermaterial beschichtet In einer sehr bevorzugten Variante wird das Polymerisationsmedium unter vermindertem Druck entfernt, wobei dieser Vorgang bei erhöhten Temperaturen, beispielsweise im Bereich von 80 bis 150 °C durchgeführt wird. Die Polymere können dann in lösemittelfreiem Zustand, insbesondere als Schmelzhaftkleber, eingesetzt und beschichtet werden. Für ausgewählte Anwendungen ist es auch von Vorteil, die Polymere in Substanz herzustellen und zu verarbeiten.

Die in dieser Erfindung beschriebenen Abmischungen können zum Erreichen der optimalen klebtechnischen Eigenschaften weiter modifiziert werden.

Beispielsweise werden die Polymere zur Herstellung von Haftklebemassen optional mit einem oder mehreren Harzen abgemischt Als Harze sind beispielsweise Terpen-, Terpenphenolharze, C₅- und C₉-Kohlenwasserstoffharze, Pinen-, Inden- und Kolophoniumharze allein und auch in Kombination miteinander einsetzbar sowie deren disproportionierte, hydrierte, polymerisierte, veresterte Derivate und Salze. Prinzipiell lassen sich aber alle in dem entsprechenden Polyacrylat löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Weiterhin können verschiedene Füllstoffe (beispielsweise Ruß, TiO₂, Voll- oder Hohlkugeln aus Glas oder anderen Materialien, Keimbildner), Blähmittel, Compoundierungsmittel und/oder Alterungsschutzmittel zugesetzt werden.

In einer besonders vorteilhaften Weiterentwicklung werden Weichmacher zur Verbesserung des Auffließverhaltens der Haftklebemasse beigemischt.

Eine Weiterentwicklung, die das erfindungsgemäße Verfahren besonders günstig für die Herstellung von beispielsweise Klebebändern macht, zeichnet sich dadurch aus, daß die Haftklebemasse aus der Schmelze heraus weiterverarbeitet wird.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwenden.

Die erfindungsgemäße Vernetzung der Polyacrylate bzw. der (Schmelz-)Haftklebemassen erfolgt durch kurzzeitige UV-Bestrahlung im Bereich von 200 bis 400 nm mit handelsüblichen Quecksilber-Hochdruck oder Mitteldrucklampen mit einer Leistung von z.B. 80 bis 200 W/cm. Es kann angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

Das erfinderische Verfahren kann hervorragend zur Herstellung strukturierter Polyacrylate, insbesondere strukturierter (Schmelz-)Haftklebemassen genutzt werden. Ein Verfahren zur Herstellung von strukturierten Polyacrylaten durch strukturierte Vernetzung von Polyacrylatmischungen zeichnet sich dadurch aus, daß die Basispolymermischung durch derart mit ultraviolettem Licht bestrahlt wird, daß nur bestimmte Bereiche der Polymermischung der UV-Strahlung ausgesetzt sind.

Das Verfahren zur Herstellung strukturierter Polyacrylate läßt sich im Besonderen derart durchführen, daß die Basispolymermischung durch eine Lochmaske derart mit ultraviolettem Licht bestrahlt wird, daß nur bestimmte Bereiche der Polymermischung der UV-Strahlung ausgesetzt sind.

Alternativ läßt sich die Strukturierung des zu härtenden Polymergemisches dadurch erzielen, daß statt der Lochmaske eine Folie, welche in der Fläche Bereiche unterschiedlicher UV-Licht-Durchlässigkeit aufweist, verwendet wird, so daß bestimmte Bereiche der Polymermischung unterschiedlichen Intensitäten der UV-Strahlung ausgesetzt sind.

In Figur 1 ist das Prinzip der selektiven Bestrahlung anhand einer Skizze veranschaulicht In der Figur wird die Bestrahlung der Acrylatmasse (2) durch eine Lochmaske (1) dargestellt, wobei sich die Acrylatmasse (2) auf dem Träger (3) befindet. Der Acrylatmasse (1) ist gemäß dem Hauptanspruch ein Photokationeninitiator beigemischt, der durch UV-Licht (4) die Vemetzungsreaktion initiiert. Die ultravioletten Strahlen (4) können die Maske (1) nur im Bereich der Löcher (11) durchdringen, so daß sich nach der Bestrahlung die im unteren Teil der Abbildung dargestellte Situation ergibt: Die Haftklebemasse (2) weist harte Segmente hoher Vemetzung (21) neben unvemetzten Segmenten (22) auf.

Die Polymerketten an den Rändern der harten Bereiche reichen in die weichen Bereiche hinein, die harten und in sich hochviskosen Bereiche sind somit mit den weichen Bereichen verknüpft und behindern diese daher in ihrer Beweglichkeit, so daß die strukturelle Festigkeit der Klebmasse erhöht wird. Diese harten Segmente erhöhen zudem die Kohäsion der Haftklebemasse. Dagegen bewirken die weichen Segmente ein leichteres Auffließen der Klebemasse auf dem Substrat und erhöhen somit die Klebkraft und die Haftklebrigkeit (Tack). Einen großen Einfluß auf die klebtechnischen Eigenschaften hat der prozentuale Anteil der bestrahlten Fläche sowie die Größe der erzeugten Segmente.

### Beispiele

Die folgenden beispielhaften Experimente sollen den Inhalt der Erfindung näher erläutern, ohne durch die Wahl der Beispiele die Erfindung unnötig einschränken zu wollen.

### Testmethoden

Zur Charakterisierung der Polyacrylatmassen und deren vemetzter Produkte dienten die im folgenden dargestellten Testmethoden:

### Scherfestigkeit (Test A1, A2)

Ein 13 mm breiter Streifen des Klebebandes wurde auf eine glatte und gereinigte Stahloberfläche aufgebracht Die Auftragsfläche betrug 20 mm × 13 mm (Länge × Breite). Anschließend wurde wie folgt vorgegangen:
Test A1: Bei Raumtemperatur wurde ein 1 kg-Gewicht an dem Klebeband befestigt und die Zeit bis zum Abfallen des Gewichtes gemessen.
Test A2: Bei 70 °C wurde ein 1 kg-Gewicht an dem Klebeband befestigt und die Zeit bis zum Abfallen des Gewichtes gemessen.

Die gemessenen Scherstandzeiten sind jeweils in Minuten angegeben und entsprechen dem Mittelwert aus drei Messungen.

### 180° Klebkrafttest (Test B)

Ein 20 mm breiter Streifen einer auf einer Polyester gecoateten Acrylathaftklebemasse wurde auf Stahl Platten aufgebracht Der Haftklebestreifen wurde zweimal mit einem 2 kg Gewicht auf das Substrat aufgedrückt. Das Klebeband wurde anschließend sofort mit 300 mm/min und im 180° Winkel vom Substrat abgezogen. Die Stahl Platten wurden zweimal mit Aceton und einmal mit Isopropanol gewaschen. Für die Messungen auf dem PE-Substrat wurden nur neue Platten verwendet. Die Meßergebnisse sind in N/cm angegeben und sind gemittelt aus drei Messungen. Alle Messungen wurden bei Raumtemperatur unter klimatisierten Bedingungen durchgeführt

### Bestimmung des Gelanteils (Test C)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert (Gewichtsanteil des Polymers, der nicht in Toluol löslich ist) bestimmt.

### Untersuchte Proben

Die für die Experimente verwendeten Proben wurden wie folgt hergestellt:
Die Polymere wurden konventionell über eine freie radikalische Polymerisation hergestellt; das mittlere Molekulargewicht lag bei etwa 800.000 g/mol.

### Beispiel 1

Ein für radikalische Polymerisationen konventioneller 2 L-Glasreaktor wurde mit 8 g Glycidylmethacrylat, 196 g n-Butylacrylat, 196 g 2-Ethylhexylacrylat und 266 g Aceton/Isopropanol (97:3) befüllt. Nachdem 45 Minuten Stickstoffgas unter Rühren durch die Reaktionslösung geleitet worden war, wurde der Reaktor auf 58 °C geheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol-Gemisch (97:3) verdünnt Nach 48 h Reaktionszeit wurde die Polymerisation abgebrochen und das Reaktionsgefäß auf Raumtemperatur abgekühlt.

Anschließend wurde mit 150 g Aceton verdünnt und 12,8 g Bisphenol A sowie 8 g Triarylsulfoniumhexafluoroantimonat (50 %ige Lösung in Propylencarbonat; Cyracure UVI-6994 ® [UNION CARBIDE]) hinzugegeben. Die Mischung wurde aus Lösung auf eine mit einem Isocyanat-Primer versehende PET-Folie mit 50 g/m² ausgestrichen und für 10 Minuten auf 120 °C erhitzt. Zur UV-Bestrahlung wurde der Xenon-Chlorid-Strahler (VIB 308 Bulb [FUSION]) eingesetzt mit einer Strahlungsintensität von 160 W/m². Nach einem Strahlendurchgang mit einer Bahngeschwindigkeit von 20 m/min wurden die Klebebandmuster nochmals für 10 Minuten erhitzt und dann nach den Testmethoden A bis C ausgetestet

### Beispiel 2

Es wurde analog zu Beispiel 1 vorgegangen. Das Polymer wurde mit 150 g Aceton verdünnt und 12,8 g Bisphenol A sowie 8 g Triarylsulfonium-hexafluorophosphat (50 %ige Lösung in Propylencarbonat; Cyracure UVI-6990 ® [UNION CARBIDE]) hinzugegeben. Die Mischung wurde aus Lösung auf eine mit einem Isocyanat-Primer versehende PET-Folie mit 50 g/m² ausgestrichen und für 10 Minuten auf 120 °C erhitzt. Zur UV-Bestrahlung wurde der Xenon-Chlorid-Strahler (VIB 308 Bulb [FUSION]) eingesetzt mit einer Strahlungsintensität von 160 W/m². Nach einem Strahlendurchgang mit einer Bahngeschwindigkeit von 20 m/min wurden die Klebebandmuster nochmals für 10 Minuten erhitzt und dann nach den Testmethoden A bis C ausgetestet.

### Beispiel 3

Es wurde analog zu Beispiel 1 vorgegangen. Das Polymer wurde auf eine mit einem Isocyanat-Primer versehende PET-Folie mit 50 g/m² ausgestrichen, für 10 Minuten bei 120 °C getrocknet, mit Elektronenstrahlung gehärtet (230 kV Beschleunigungsspannung, ESH-Anlage der Fa. Crosslinking) und anschließend klebetechnisch mit den Testmethoden A bis C ausgetestet.

### Beispiel 4

Es wurde analog zu Beispiel 1 vorgegangen. Zur Abmischung wurden 4 g Triarylsulfonium-hexafluoroantimonat (50 %ige Lösung in Propylencarbonat; Cyracure UVI-6994 ® [UNION CARBIDE]) hinzugegeben.

### Beispiel 5

Ein für radikalische Polymerisationen konventioneller 2 L-Glasreaktor wurde mit 8 g Glycidylmethacrylat, 4 g Acrylsäure, 194 g n-Bútylacrylat, 194 g 2-Ethylhexylacrylat und 266 g Aceton/Isopropanol (97:3) befüllt. Nachdem 45 Minuten Stickstoffgas unter Rühren durch die Reaktionslösung geleitet worden war, wurde der Reaktor auf 58 °C geheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol-Gemisch (97:3) verdünnt. Nach 48 h Reaktionszeit wurde die Polymerisation abgebrochen und das Reaktionsgefäß auf Raumtemperatur abgekühlt.

Anschließend wurde mit 150 g Aceton verdünnt und 12,8 g Bisphenol A sowie 8 g Triarylsuffoniumhexafluoroantimonat (50 %ige Lösung in Propylencarbonat; Cyracure UVI-6994 ® [UNION CARBIDE]) hinzugegeben. Die Mischung wurde aus Lösung auf eine mit einem Isocyanat-Primer versehende PET-Folie mit 50 g/m² ausgestrichen und für 10 Minuten auf 120 °C erhitzt. Zur UV-Bestrahlung wurde der Xenon-Chlorid-Strahler (VIB 308 Bulb [FUSION]) eingesetzt mit einer Strahlungsintensität von 160 W/m². Nach einem Strahlendurchgang mit einer Bahngeschwindigkeit von 20 m/min wurden die Klebebandmuster nochmals für 10 Minuten erhitzt und dann nach den Testmethoden A bis C ausgetestet.

### Beispiel 6

Ein für radikalische Polymerisationen konventioneller 2 L-Glasreaktor wurde mit 8 g Glycidylmethacrylat , 4 g Acrylsäure, 20 g Methylacrylat, 20 g N-tert.-Butylacrylamid, 348 g 2-Ethylhexylacrylat und 266 g Aceton/Isopropanol (97:5) befüllt. Nachdem 45 Minuten Stickstoffgas unter Rühren durch die Reaktionslösung geleitet worden war, wurde der Reaktor auf 58 °C geheizt und 0,4 g AIBN [2,2'-Azobis(2-methylbutyronitril)] hinzugegeben.

Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol-Gemisch (97:5) verdünnt. Nach 48 h Reaktionszeit wurde die Polymerisation abgebrochen und das Reaktionsgefäß auf Raumtemperatur abgekühlt. Das mittlere Molekulargewicht beträgt etwa 710000 g/mol.

Anschließend wurde mit 150 g Aceton verdünnt und 12,8 g Bisphenol A sowie 8 g Triarylsulfoniumhexafluoroantimonat (50 %ige Lösung in Propylencarbonat; Cyracure UVI-6994 ® [UNION CARBIDE]) hinzugegeben. Die Mischung wurde aus Lösung auf eine mit einem Isocyanat-Primer versehende PET-Folie mit 50 g/m² ausgestrichen und für 10 Minuten auf 120 °C erhitzt. Zur UV-Bestrahlung wurde der Xenon-Chlorid-Strahler (VIB 308 Bulb [FUSION]) eingesetzt mit einer Strahlungsintensität von 160 W/m². Nach einem Strahlendurchgang mit einer Bahngeschwindigkeit von 20 m/min wurden die Klebebandmuster nochmals für 10 Minuten erhitzt und dann nach den Testmethoden A bis C ausgetestet.

### Beispiel 7

Ein für radikalische Polymerisationen konventioneller 2 L-Glasreaktor wurde mit 8 g Hydroxyethylemethacrylat, 196 g n-Bútylacrylat, 196 g 2-Ethylhexylacrylat und 266 g Aceton/Isopropanol (97:3) befüllt. Nachdem 45 Minuten Stickstoffgas unter Rühren durch die Reaktionslösung geleitet worden war, wurde der Reaktor auf 58 °C geheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol-Gemisch (97:3) verdünnt. Nach 48 h Reaktionszeit wurde die Polymerisation abgebrochen und das Reaktionsgefäß auf Raumtemperatur abgekühlt.

Anschließend wurde mit 150 g Aceton verdünnt und 20 g Bis epoxidiertes Bisphenol A Rütapox 164™ (Fa. Bakelite AG) sowie 8 g Triarylsulfonium-hexafluoroantimonat (50 %ige Lösung in Propylencarbonat; Cyracure UVI-6994 ® [UNION CARBIDE]) hinzugegeben. Die Mischung wurde aus Lösung auf eine mit einem Isocyanat-Primer versehende PET-Folie mit 50 g/m² ausgestrichen und für 10 Minuten auf 120 °C erhitzt. Zur UV-Bestrahlung wurde der Xenon-Chlorid-Strahler (VIB 308 Bulb [FUSION]) eingesetzt mit einer Strahlungsintensität von 160 W/m². Nach einem Strahlendurchgang mit einer Bahngeschwindigkeit von 20 m/min wurden die Klebebandmuster nochmals für 10 Minuten erhitzt und dann nach den Testmethoden A bis C ausgetestet.

### Beispiel 8

Es wurde analog zu Beispiel 7 vorgegangen. Das Polymer wurde auf eine mit einem Isocyanat-Primer versehende PET-Folie mit 50 g/m² ausgestrichen, für 10 Minuten bei 120 °C getrocknet, mit Elektronenstrahlung gehärtet (230 kV Beschleunigungsspannung, ESH-Anlage der Fa. Crosslinking) und anschließend klebetechnisch mit den Testmethoden A - C ausgetestet.

### Beispiel 9

Ein für radikalische Polymerisationen konventioneller 2 L-Glasreaktor wurde mit 8 g Hydroxyethylemethacrylat, 4 g Acrylsäure, 194 g n-Bútylacrylat, 194 g 2-Ethylhexylacrylat und 266 g Aceton/Isopropanol (97:3) befüllt. Nachdem 45 Minuten Stickstoffgas unter Rühren durch die Reaktionslösung geleitet worden war, wurde der Reaktor auf 58 °C geheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol-Gemisch (97:3) verdünnt. Nach 48 h Reaktionszeit wurde die Polymerisation abgebrochen und das Reaktionsgefäß auf Raumtemperatur abgekühlt.

Anschließend wurde mit 150 g Aceton verdünnt und 20 g Bis epoxidiertes Bisphenol A Rütapox 164™ (Fa. Bakelite AG) sowie 8 g Triarylsulfonium-hexafluoroantimonat (50 %ige Lösung in Propylencarbonat; Cyracure UVI-6994 ® [UNION CARBIDE]) hinzugegeben. Die Mischung wurde aus Lösung auf eine mit einem Isocyanat-Primer versehende PET-Folie mit 50 g/m² ausgestrichen und für 10 Minuten auf 120 °C erhitzt. Zur UV-Bestrahlung wurde der Xenon-Chlorid-Strahler (VIB 308 Bulb [FUSION]) eingesetzt mit einer Strahlungsintensität von 160 W/m². Nach einem Strahlendurchgang mit einer Bahngeschwindigkeit von 20 m/min wurden die Klebebandmuster nochmals für 10 Minuten erhitzt und dann nach den Testmethoden A bis C ausgetestet.

### Beispiel 10

Ein für radikalische Polymerisationen konventioneller 2 L-Glasreaktor wurde mit 8 g Hydroxyethylemethacrylat, 4 g Acrylsäure, 20 g Methylacrylat, 20 g N-tert.-Butylacrylamid, 348 g 2-Ethylhexylacrylat und 266 g Aceton/Isopropanol (97:5) befüllt Nachdem 45 Minuten Stickstoffgas unter Rühren durch die Reaktionslösung geleitet worden war, wurde der Reaktor auf 58 °C geheizt und 0,4 g AIBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol-Gemisch (97:5) verdünnt. Nach 48 h Reaktionszeit wurde die Polymerisation abgebrochen und das Reaktionsgefäß auf Raumtemperatur abgekühlt. Das mittlere Molekulargewicht beträgt etwa 686000 g/mol.

Anschließend wurde mit 150 g Aceton verdünnt und 20 g Bis epoxidiertes Bisphenol A Rütapox 164™ (Fa. Bakelite AG) sowie 8 g Triarylsulfonium-hexafluorophosphat (50 %ige Lösung in Propylencarbonat; Cyracure UVI-6990 ® [UNION CARBIDE]) hinzugegeben. Die Mischung wurde im Unterdruck vom Lösemittel befreit und dann aus der Schmelze mit 120 °C durch eine Breitschlitzdüse eine mit einem Isocyanat-Primer versehende PET-Folie mit 50 g/m² beschichtet. Zur UV-Bestrahlung wurde der Xenon-Chlorid-Strahler (VIB 308 Bulb [FUSION]) eingesetzt mit einer Strahlungsintensität von 160 W/m². Nach einem Strahlendurchgang mit einer Bahngeschwindigkeit von 20 m/min wurden die Klebebandmuster nochmals für 10 Minuten erhitzt und dann nach den Testmethoden A bis C ausgetestet

### Resultate

Die Ergebnisse der klebtechnischen Ausprüfungen der Beispiele 1 bis 3 sind in Tabelle 1 dargestellt.

**Tabelle 1**

| Beispiel | SSZ 10 N, RT [min] (Test A1) | SSZ 10 N, 70 °C [min] (Test A2) | KK Stahl [N/cm] (Test B) | Gelwert [%] (Test C) |
|---|---|---|---|---|
| 1 | +10000 | 7885 | 3,8 | 70 |
| 2 | +10000 | +10000 | 3,7 | 65 |
| 3^{a} | 255 | 30 | 4,0 | 43 |
| 3^{b} | 1085 | 125 | 4,0 | 63 |

| | | | | |
|---|---|---|---|---|
| ^{a}bestrahlt mit 40 kGy ES-Dosis; | | | | |
| ^{b}bestrahlt mit 60 kGy ES-Dosis SSZ: Scherstandzeiten KK: Klebkraft | | | | |

Die Untersuchungen der Beispiele 1 und 2 belegen, daß sich mit dem erfindungsgemäßen Verfahren Haftklebemassen mit einer sehr hohen Scherfestigkeit herstellen lassen. Sowohl Triarylsulfonium-hexafluorophosphat als auch Triarylsulfonium-hexafluoroantimonat sind als Photoinitiatoren zur Epoxid-Vemetzung geeignet Die Epoxidfunktionen sind durch Glycidylmethacrylat in der Polymerkette einpolymerisiert. Zur Vernetzung wird Bisphenol A eingesetzt. Beispiel 3 demonstriert die Überlegenheit der erfindungsgemäßen Vernetzung gegenüber der konventionellen Elektronenstrahl-Härtung. Bei etwa dem gleichen Gelwert liegt die Scherfestigkeit der Elektronenstrahl-vernetzten Proben deutlich unterhalb derjenigen der Beispiele 1 und 2.

Die Ergebnisse der klebtechnischen Auswertungen der Beispiele 4 bis 6 sind in Tabelle 2 dargestellt.

**Tabelle 2**

| Beispiel | SSZ 10 N, RT [min] (Test A1) | SSZ 10 N, 70 °C [min] (Test A2) | KK Stahl [N/cm] (Test B) | Gelwert [%] (Test C) |
|---|---|---|---|---|
| 4 | +10000 | +10000 | 3,6 | 69 |
| 5 | +10000 | +10000 | 3,6 | 73 |
| 6 | +10000 | +10000 | 3,5 | 70 |
| SSZ: Scherstandzeiten | | | | |
| KK: Klebkraft | | | | |

Die Beispiele 4 bis 6 unterlegen die universelle Einsetzbarkeit des erfindungsgemäßen Vemetzungsverfahren für Acrylathaftklebemassen. So kann z.B. auch Acrylsäure als Comonomer verwendet und die Epoxidvernetzung durchgeführt werden. Beispiel 4 beweist, daß zur effizienten Vernetzung auch der Photoinitiatoranteil noch reduziert werden kann. Die Scherfestigkeit bleibt vollständig erhalten. Auch kann das mittlere Molekulargewicht abgesenkt werden. Beispiel 6 besitzt ein mittleres Molekulargewicht von etwa 700.000 g/mol und erreicht die optimale Scherfestigkeit dennoch durch die erfindungsgemäße Epoxidvemetzung.

Die Ergebnisse der Beispiele 7 bis 10 sind in der folgenden Tabelle 3 zusammengefaßt.

**Tabelle 3**

| Beispiel | SSZ 10 N, RT [min] (Test A1) | SSZ 10 N, 70 °C [min] (Test A2) | KK Stahl [N/cm] (Test B) | Gelwert [%] (Test C) |
|---|---|---|---|---|
| 7 | +10000 | 6590 | 3,8 | 67 |
| 8^{a} | 345 | 55 | 4,1 | 39 |
| 8^{b} | 1285 | 160 | 4,2 | 59 |
| 9 | +10000 | +10000 | 3,6 | 71 |
| 10 | +10000 | +10000 | 3,7 | 68 |

| | | | | |
|---|---|---|---|---|
| ^{a}bestrahlt mit 40 kGy ES-Dosis; | | | | |
| ^{b}bestrahlt mit 60 kGy ES-Dosis SSZ: Scherstandzeiten KK: Klebkraft | | | | |

Für die Beispiele 7, 9 und 10 wurde der inverse Weg beschritten. Durch Copolymerisation von Hydroxyethylmethacrylat (HEMA) wurden statistisch Hydroxygruppen entlang der Polymerkette eingebaut, die dann mit einem difunktionellen Epoxid unter Säurekatalyse vemetzt wurden. Die erfindungsgemäße Vemetzungsreaktion verläuft auch über diesen Weg bedeutend effizienter als die Vergleich durchgeführte Elektronenstrahl-Härtung. Zudem werden auch hier unterschiedliche Comonomerzusammensetzungen toleriert. Beispiel 10 verdeutlicht, daß stärker geregelte Massen als Hotmelt verarbeitbar sind und mit der Vemetzung ebenfalls in den hochscherfesten Bereich hineinreichen.

Als besonders effizient hat sich die Variante des Verfahrens herausgestellt, bei der epoxyfunktionalisierte Polyacrylate mit hydroxyfunktionalisierten Vernetzern (Alkoholen) umgesetzt wurden.

## Patentansprüche

1. Verfahren zur Herstellung vemetzter Polyacrylate, bei welchem durch Copolymerisation einer Monomermischung auf Acrylatbasis ein Polymer erzeugt wird und nach der Polymerisation mittels UV-Strahlung eine Vemetzung des Polymers hervorgerufen wird, **dadurch gekennzeichnet, daß**
bis zu 10 Gew.-% copolymerisierbare Monomere, welche eine oder mehrere Epoxygruppen und/oder eine oder mehrere Hydroxygruppen enthalten, während der Copolymerisation in die Polymere eingebaut werden, und den Polymeren vor der Vemetzung zumindest ein Photokationenerzeuger sowie ein oder mehrere di- oder multifunktionelle Epoxide und/oder Alkohole zugesetzt werden.

2. Verfahren nach Anspruch 1, **dadurch gekennzeichnet, daß**
die Monomermischung derart zusammengesetzt ist, daß die resultierenden Polymere haftklebende Eigenschaften besitzen.

3. Verfahren nach zumindest einem der vorangehenden Ansprüche, **dadurch gekennzeichnet, daß**
es sich bei den zu vemetzenden Polyacrylaten um solche handelt, welche vor der Vemetzung im Heißschmelzverfahren ver- und bearbeitet wurden .

4. Verfahren nach zumindest einem der vorangehenden Ansprüche, **dadurch gekennzeichnet, daß**
die Monomermischung sich wie folgt zusammensetzt
a) 60 bis 99,5 Gew.-% (Meth-)Acrylsäure und/oder (Meth-)Acrylsäureester der folgenden Formel 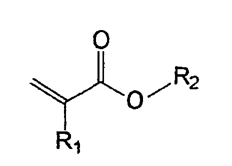 wobei R¹ = H oder CH₃ und R² eine Alkylkette mit 1 bis 20 C-Atomen, insbesondere mit 4 bis 14 C-Atomen, sehr bevorzugt mit 4 bis 9 C-Atomen ist
b) 0,5 bis 10 Gew.-% copolymerisierbare Monomere, welche eine oder mehrere Epoxygruppen und/oder eine oder mehrere Hydroxygruppen enthalten,
c) optional bis zu maximal 39,5 Gew.-% copolymerisierbare olefinisch ungesättigte Monomere mit funktionellen Gruppen, welche die Doppelbindung für die Polymerisationsreaktion aktivieren,
wobei die Komponenten der Monomermischung sich zu 100 % addieren,
und/oder den Polymeren vor der Vemetzung
d) 0,01 bis 25 Gew.-% des Photokationenerzeugers und
e) 0,1 bis 5 Gew.-% eines oder mehrerer di- oder multifunktioneller Epoxide und/oder eines oder mehrerer di- oder multifunktioneller Alkohole
zugesetzt werden, so daß sich die Polymere und die Komponenten d) und e) zu 100 Gew.-% addieren.

5. Verfahren nach zumindest einem der vorangehenden Ansprüche, **dadurch gekennzeichnet, daß**
als Photokationenerzeuger ein Triarylsulfonium-hexafluorosalz der 15. Gruppe des Periodensystems, insbesondere Triarylsulfonium-hexafluorophosphat und/oder Triarylsulfonium-hexafluoroantimonat verwendet werden.

6. Verfahren nach zumindest einem der vorangehenden Ansprüche, **dadurch gekennzeichnet, daß**
während der Vemetzung durch Abdeckung der zu vemetzenden Polyacrylate mit einer Maske mit Bereichen unterschiedlicher UV-Licht-Durchlässigkeit eine Strukturierung der vemetzten Polyacrylate erzielt wird, wobei die Strukturierung der Polyacrylate darin besteht, daß in den Polyacrylaten Bereiche hoher Vernetzung neben Bereichen geringer Vernetzung und/oder unvemetzten Bereichen vorliegen.

7. Verwendung von di- oder multifunktionellen sauerstoffhaltigen Verbindungen, insbesondere von di- oder multifunktionellen Epoxiden oder Alkoholen, als Vemetzungsreagenz für die bei Anwesenheit eines Photokationenerzeugers durch ultraviolette Strahlung hervorgerufene Vemetzungsreaktion von durch Epoxygruppen bzw. durch Hydroxygruppen funktionalisierten Polyacrylaten.

## Claims

1. Process for preparing crosslinked polyacrylates, in which an acrylate-based monomer mixture is copolymerized to produce a polymer and, after the polymerization, crosslinking of the polymer is brought about by UV radiation, **characterized in that** up to 10% by weight of copolymerizable monomers containing one or more epoxy groups and/or one or more hydroxyl groups being incorporated into the polymers during the copolymerization and, prior to crosslinking, at least one photocation generator and also one or more di- or polyfunctional epoxides and/or alcohols are added.

2. Process according to Claim 1, **characterized in that** the composition of the monomer mixture is such that the resulting polymers possess pressure sensitively adhering properties.

3. Process according to at least one of the preceding claims, **characterized in that** the polyacrylates for crosslinking are polyacrylates which have been processed and worked on prior to crosslinking in the hotmelt process.

4. Process according to at least one of the preceding claims, **characterized in that** the composition of the monomer mixture is as follows:
a) 60 to 99.5% by weight of (meth)acrylic acid and/or (meth)acrylate esters of the following formula 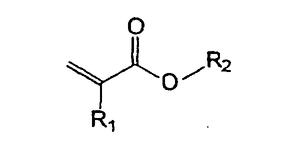 where R¹ = H or CH₃ and R² is an alkyl chain having 1 to 20 carbon atoms, in particular having from 4 to 14 carbon atoms, very particularly having 4 to 9 carbon atoms,
b) 0.5 to 10% by weight of copolymerizable monomers which contain one or more epoxy groups and/or one or more hydroxyl groups,
c) optionally up to a maximum of 39.5% by weight of copolymerizable olefinically unsaturated monomers containing functional groups which activate the double bond for the polymerization reaction,
the components of the monomer mixture adding up to 100%,
and/or if, prior to crosslinking,
d) 0.01 to 25% by weight of a photocation generator and
e) 0.1 to 5% by weight of one or more di- or polyfunctional epoxides and/or one or more di- or polyfunctional alcohols
are added to the polymers, so that the polymers and components d) and e) add up to 100% by weight.

5. Process according to at least one of the preceding claims, **characterized in that** a triarylsulphonium hexafluoro salt from group 15 of the periodic system, especially triarylsulphonium hexafluorophosphate and/or triarylsulphonium hexafluoroantimonate, are used as photocation generators.

6. Process according to at least one of the preceding claims, **characterized in that**, in the course of crosslinking, structuring of the crosslinked polyacrylates is achieved by covering the polyacrylates to be crosslinked with a mask having regions of different UV transparency, the structuring of the polyacrylates consisting in the presence within the polyacrylates of regions of high crosslinking alongside regions of low crosslinking and/or noncrosslinked regions.

7. Use of di- or polyfunctional oxygen compounds, particularly of di- or polyfunctional epoxides or alcohols, as crosslinking reagents for the crosslinking reaction, brought about by ultraviolet radiation in the presence of a photocation generator, of polyacrylates functionalized by epoxy groups and/or hydroxyl groups.

## Revendications

1. Procédé pour la préparation de polyacrylates réticulés, dans lequel on obtient, par copolymérisation d'un mélange de monomères à base d'acrylate, un polymère et on provoque une réticulation du polymère, après la polymérisation, au moyen d'un rayonnement UV **caractérisé en ce qu'**on incorpore jusqu'à 10% en poids de monomères copolymérisables, qui contiennent un ou plusieurs groupes époxy et/ou un ou plusieurs groupes hydroxy, dans les polymères pendant la copolymérisation et les polymères sont mélangés, avant la réticulation, avec au moins un générateur de photocations ainsi qu'avec un ou plusieurs époxydes difonctionnels ou polyfonctionnels et/ou un ou plusieurs alcools difonctionnels ou polyfonctionnels.

2. Procédé selon la revendication 1, **caractérisé en ce que** le mélange de monomères est constitué de telle manière que les polymères obtenus présentent des propriétés auto-adhésives.

3. Procédé selon au moins l'une quelconque des revendications précédentes, **caractérisé en ce qu'**il s'agit, pour les polyacrylates à réticuler, de ceux qui ont été transformés et mis en oeuvre avant la réticulation dans un procédé en masse fondue à chaud.

4. Procédé selon au moins l'une quelconque des revendications précédentes, **caractérisé en ce que** le mélange de monomères est composé comme suit :
a) 60 à 99, 5% en poids d'acide (méth)acrylique et/ou d'ester de l'acide (méth)acrylique de la formule suivante 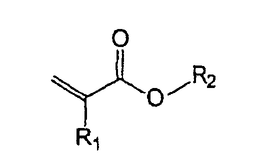 où R¹ = H ou CH₃ et R² représente une chaîne alkyle comprenant 1 à 20 atomes de carbone, en particulier 4 à 14 atomes de carbone, de manière particulièrement préférée 4 à 9 atomes de carbone,
b) 0,5 à 10% en poids de monomères copolymérisables, qui contiennent un ou plusieurs groupes époxy et/ou un ou plusieurs groupes hydroxy,
c) éventuellement jusqu'au maximum 39,5% en poids de monomères copolymérisables oléfiniquement insaturés présentant des groupes fonctionnels qui activent la double liaison pour la réaction de polymérisation,
les composants du mélange de monomères se complétant en formant 100%
et/ou les polymères, avant la réticulation, sont mélangés avec
d) 0,01 à 25% en poids d'un générateur de photocations et
e) 0,1 à 5% en poids d'un ou de plusieurs époxydes difonctionnels ou polyfonctionnels et/ou un ou plusieurs alcools difonctionnels ou polyfonctionnels,
de telle manière que les polymères et les composants d) et e) s'additionnent en formant 100% en poids.

5. Procédé selon au moins l'une quelconque des revendications précédentes, **caractérisé en ce qu'**on utilise comme générateur de photocations un sel hexafluoré de triarylsulfonium du 15ème groupe du système périodique des éléments, en particulier l'hexafluorophosphate de triarylsulfonium et/ou l'hexafluoroantimonate de triarylsulfonium.

6. Procédé selon l'une quelconque des revendications précédentes, **caractérisé en ce qu'**on obtient pendant la réticulation, par recouvrement des polyacrylates à réticuler avec un masque présentant des zones de transparence différente à la lumière UV une structuration des polyacrylates réticulés, la structuration des polyacrylates résidant **en ce qu'**on trouve dans les polyacrylates des zones de réticulation élevée à côté de zones de réticulation plus faible et/ou de zones non réticulées.

7. Utilisation de composés difonctionnels ou polyfonctionnels, contenant de l'oxygène, en particulier d'époxydes ou d'alcools difonctionnels ou polyfonctionnels, comme réactif de réticulation pour la réaction de réticulation fonctionnalisés par des groupes époxy ou hydroxy provoquée par un rayonnement ultraviolet en présence d'un générateur de photocations de polyacrylates.
